# EUROPEAN PATENT APPLICATION

(11) **EP 1 031 863 A2**
(43) Date of publication of application: **30.08.2000**
(21) Application number: 00400224.2
(22) Date of filing: 28.01.2000
(51) Int. Cl.: G02B 6/44

(54) **Optical fiber ribbon telecommunications cable element containing stacks of optical fiber ribbons**

(30) Priority: 26.02.1999 US 258762
(71) Applicant: ALCATEL, 75008 Paris (FR)
(72) Inventor: Stulpin, Robert W., Catawba, North Carolina 28609 (US)
(74) Representative: Cabinet Hirsch

(57) **Abstract**

An optical fiber telecommunications cable element (10) containing stacks (14, 16) of optical fiber ribbons is disclosed. The element comprises a tube (12), a first stack of optical fiber ribbons (14) disposed in the tube, a second stack of optical fiber ribbons (16) disposed in the tube adjacent to the first stack of optical ribbons, and a separator (18a, 18b, 18c) positioned between the first and second optical fiber ribbon stacks. The separator prevents undesirable mixing of the two stacks of optical fiber ribbons during manufacturing and in the field.

## Description

### BACKGROUND OF THE INVENTION

### Field of the Invention

The present invention relates to optical fiber telecommunications cables. More particularly, the present invention relates to an optical fiber telecommunications cable element containing at least two stacks of optical fiber ribbons separated by a separator to prevent stack mixing. The invention is particularly useful for high count optical fiber telecommunications distribution cables containing many optical fiber ribbons.

### Description of the Prior Art

Optical fiber telecommunications cables have been and are used to transmit information at high rates and very long distances. The transmission medium of the optical fiber telecommunication cable are hair-thin optical fibers. The optical fibers in an optical fiber telecommunications cable may be loosely laid in buffer tubes. One or more buffer tubes may be surrounded by a protective jacket. Alternatively, the optical fibers may be arranged in a planar array and held together in the array by a thermoplastic matrix material to form an optical fiber ribbon. Optical fiber ribbons are well known in the art and are typically used when mass optical fiber splicing is performed. In the United States, a typical optical fiber ribbon has 12 optical fibers.

Optical fiber ribbons are sometimes used in high fiber count central tube telecommunication cables. In such cables, the high fiber count is obtained by stacking a plurality of optical fiber ribbons and disposing the stack in a protective central buffer tube. In some designs, the buffer tube is surrounded by a protective jacket, strength members and armoring. More particularly, a 432 fiber cable, for example, may be comprised of a single stack of 36 optical fiber ribbons each having 12 optical fibers. The problem with having such a large number of ribbons form a single stack is that the stack becomes unstable and the end fibers in the ribbons become subjected to a high stress. To overcome some of the drawbacks associated with the use of a large stack of optical fibers, it would be better to arrange the 432 fibers in two side-by-side stacks of 18 optical fiber ribbons containing 12 optical fibers. Such an arrangement will improve stability of the stacks by reducing the number of fibers in each stack, relieve stress on the end fibers in the ribbons and also reduce the overall cable diameter required to encompass and protect the 432 optical fiber arranged in optical fiber ribbons. However, the arrangement of the optical fiber ribbons in the two side-by-side stacks creates the risk that the optical fiber ribbons could slide and mix together during the stranding part of the manufacturing process as well as after, upsetting the intentional arrangement and order of optical fibers.

US-A-5 249 249, US-A-5259050, US-A-5 319 730, US-A-5 369 720, US-A-5 487 126, US-A-5 587 115, GB-A-1 584 249, DE-A-40 40 715 DE-A-42 11 488, JP-A-55 98704 and JP-A-4 37707 discuss cables having a plurality of waveguide ribbons or fibers.

### SUMMARY OF THE INVENTION

It is an object of the present invention to provide an optical fiber cable containing at least two stacks of optical fiber ribbons whose orderly arrangement is preserved during manufacture as well preserved inside an optical fiber telecommunications element placed in operation in the field.

It is another object of the present invention to prevent two or more stacks of optical fiber ribbons from mixing together inside an optical fiber cable telecommunications element.

The present invention is designed to meet the foregoing objectives by providing an optical fiber telecommunications cable element comprising a tube, a first stack of optical fiber ribbons disposed in the tube, a second stack of optical fiber ribbons disposed in the tube adjacent to the first stack of optical ribbons, and a separator positioned between the first and second optical fiber ribbon stacks.

The invention will be more fully understood when reference is made to the following detailed description taken in conjunction with the accompanying drawings.

### BRIEF DESCRIPTION OF THE DRAWINGS

The drawings, not drawn to scale, include:
FIG. 1, which is a cross-sectional view of one embodiment of an optical fiber telecommunications cable element according to the present invention;
FIG. 2, which is a cross-sectional view of a second embodiment of an optical fiber cable according to the present invention;
FIG. 3, which is a cross-sectional view of a third embodiment of an optical fiber cable according to the present invention;
FIG. 4, which is a cross-sectional view of a first alternative embodiment of the separator;
FIG. 5, which is a cross-sectional view of the optical fiber ribbon stacks and the first alternative embodiment of the separator; and
FIG. 6, which is a cross-sectional view of a second alternative embodiment of the separator; and
FIG. 7, which is a cross-sectional view of the optical fiber ribbon stacks and the second alternative embodiment of the separator.

### DETAILED DESCRIPTION OF THE PRESENT INVENTION

Referring to the FIGS., the present invention concerns an optical fiber telecommunications cable element **10**. The element **10** may form the central tube of a central tube type optical fiber telecommunications cable (not shown) or may be one of several telecommunications elements in a helically or S-Z stranded optical fiber telecommunications cable (not shown). Both types of cables are well known in the art.

The telecommunications element **10** is formed by a tube **12** which has a first stack of optical fiber ribbons **14** and a second stack of optical fiber ribbons **16** disposed therein. Each optical fiber ribbon in the stacks contains **12** optical fibers. As illustrated in the FIGS., the second stack of optical fiber ribbons **16** is disposed in the tube so as to be adjacent to the first stack of optical ribbons **14**. A separator **18** is also disposed in the tube and positioned between the first and second optical fiber ribbon stacks **14, 16** to prevent mixing of the optical fiber ribbon stacks. The separator **18** can be made of any suitable material such as metal or a thermoplastic polymer. Preferably, the separator is made of an inexpensive thermoplastic polymeric material that can be extruded during the cable stranding process. The separator **18** may be affixed to the one or both of the stacks of optical fiber ribbons **14, 16** by an adhesive or any other suitable affixing means. For example, the ends of the ribbons of the first stack **14** which are adjacent to the separator **18** may be affixed to the separator by the application of an adhesive (not shown) to such ends, to the separator **18** or both. Likewise, the ends of the optical fiber ribbons in the second stack **16** which are adjacent to the separator **18** may be affixed to the separator by the application of an adhesive to such ends, to the separator **18** or both. The affixation of the first and second stacks **14, 16** to the separator **18** may facilitate the disposition of the aforementioned components in the tube **12** during the manufacturing process by keeping the arrangement of the stacks and separator together and orderly. The adhesive chosen to affix the ribbons in the stacks to the separator should be chosen carefully to permit reasonably easy separation of a selected ribbon from one of the stacks **14, 16** and the separator **18** so that the fibers in the remaining ribbons or the selected ribbon are not unduly disturbed. Affixation of some or all of the optical fiber ribbons in each of the stacks **14, 16** to the separator **18** should assure that the optical fiber ribbons in the first and second stacks **14, 16** lay substantially co-planar with respect to each other. Rubberized pressure sensitive adhesives such as those found in magazines used to secure inserts, but permit release thereof, may be suitable for affixing the ends of the fiber ribbons to the separator.

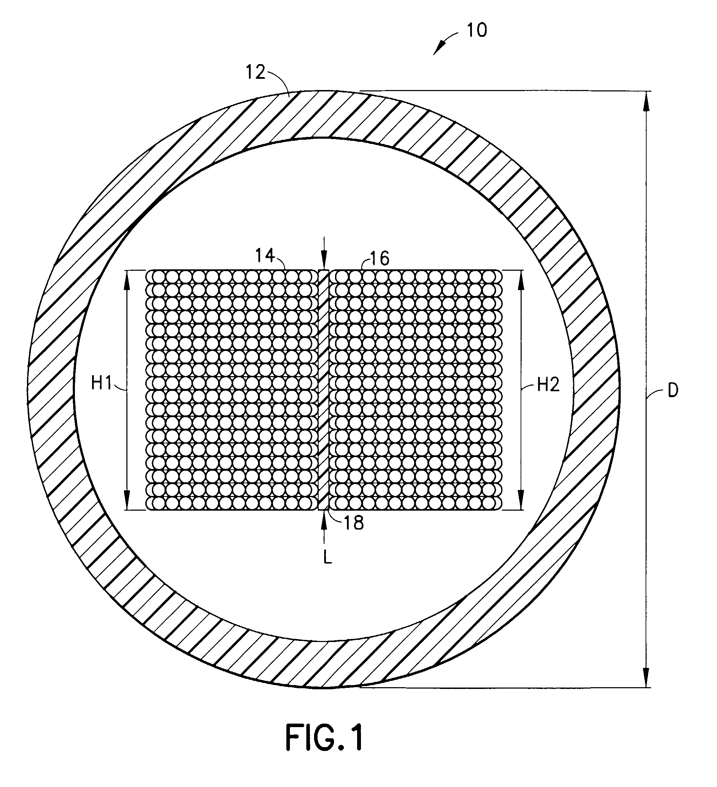

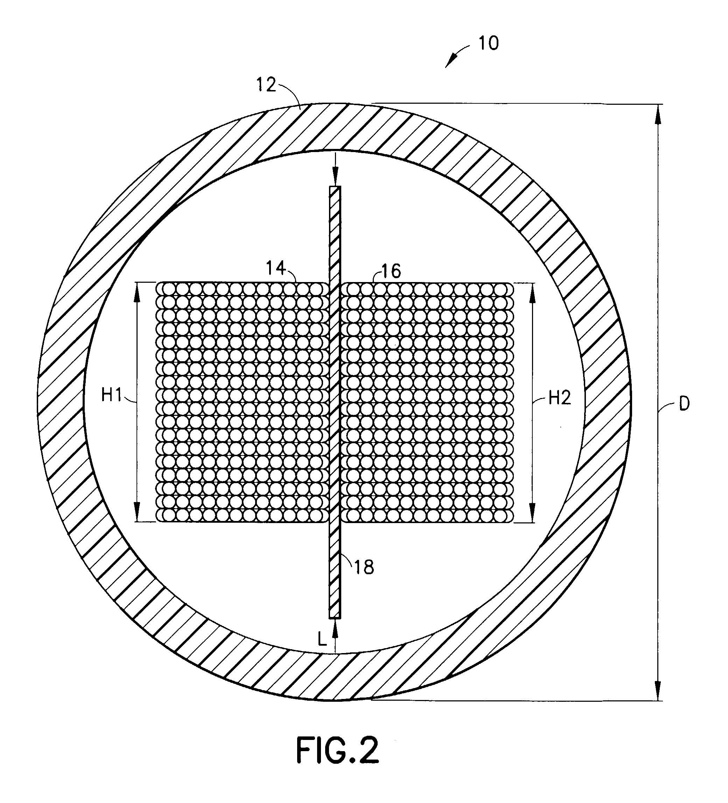

As illustrated in all of the FIGS, it will be seen that the separator **18** has a length **L**, the tube **12** has an inside diameter **D**, the first stack of optical fiber ribbons **14** has a height **H1** and the second stack of optical fiber ribbons **16** has a height **H2.** In the embodiment illustrated in FIG. 1, the heights **H1, H2** of both ribbon stacks **14, 16** are approximately the same and the length **L** of the separator **18** is also approximately the same as the heights of the **H1, H2** of the stacks. In the case where some or all of the optical fiber ribbons in the stacks are not affixed to the separator **18**, it may be preferable to set the length **L** of the separator **18** to be substantially the same as the inside diameter **D** of the tube **12**, as illustrated in FIG. 2, to prevent mixing. Of course, those skilled in the art will now appreciate that some length **L** of the separator **18** which is greater than the height **H1, H2** of either stack of optical fiber ribbons but less than the inside diameter **D** may be sufficient to prevent mixing of the optical fiber ribbons in each of the stacks **14, 16**.

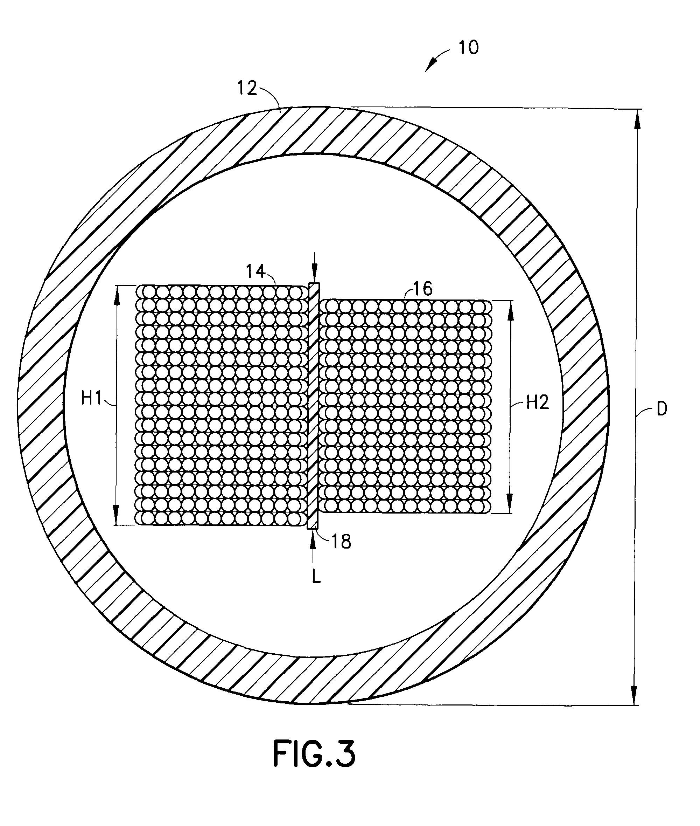

In the embodiment illustrated in FIG. 3, the first stack of optical fiber ribbons **14** has a height H1 which is greater than height H2 of the second stack of optical fiber ribbons **16** due to the fact that there are a lesser number of optical fiber ribbons making up the second stack **16** than making up the first stack **14.** In this embodiment, the length **L** of the separator is set to be at least substantially the same as the height of the taller stack of optical fiber ribbons, in this case H1.

The advantageous side-by-side design configuration generally facilitates the provision of a relatively compact arrangement of optical fiber ribbons in a high fiber count optical fiber ribbon telecommunications cable. Those skilled in the art will appreciate that a compact, high fiber count telecommunications cable design is desirable, in part, because it enables a manufacturer to place more cable on a standard size reel. The cross-sectional dimensions of a high fiber count telecommunications cable can be optimized for compactness with the present invention while maintaining optical fiber ribbon integrity. For example, a 432 fiber count cable element may be formed from 36 optical fiber ribbons each containing 12 optical fibers. If the cable element **10** were made of one stack of optical fiber ribbons, the inside diameter **D** of the tube **12** would have to be larger to accommodate the dimensions of the single stack than in the case where the same 36 ribbons were arranged in the two side-by-side stacks as disclosed herein and depicted in FIG. 1. While the same compactness might be achieved by disposing a single stack of 18 ribbons containing 24 optical fibers in the tube **12** rather than two side-by-side stacks of 18 ribbons, such as **14, 16,** each containing 12 optical fibers, current commercially available fiber fusion splicing units are configured to splice ribbons containing a maximum of 12 optical fibers, thus an end user of such telecommunications element will be able to conduct splicing operations without purchasing additional splicing equipment. Furthermore, if a stack of 24 fiber splittable ribbons was used, the ribbons must maintain a ribbon structure of at most 12 fiber sub-units. While such ribbons exist, the 24 fiber splittable ribbon does not always maintain a good ribbon structure after splitting. The present invention facilitates the desirable side-by-side configuration of optical fiber ribbons by preventing mixing of the two stacks of optical fibers and by generally keeping the order of the optical fiber ribbons in tact. The integrity of the ribbon's structure in each of the stacks is maintained when access to a particular ribbon is made.

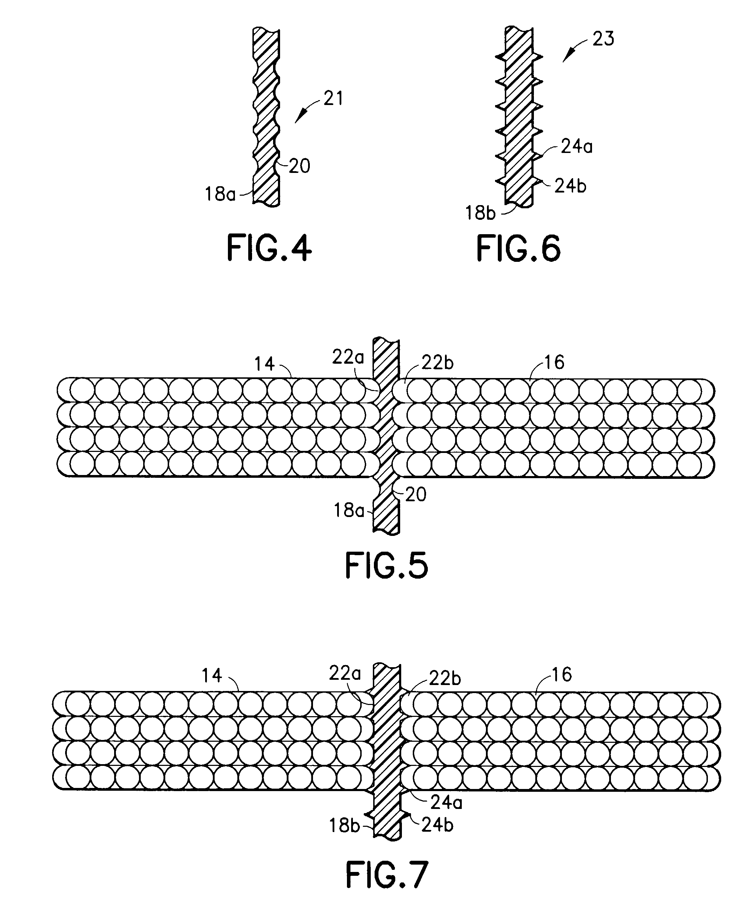

Referring to FIGS. 4 and 5, a first alternative embodiment of the separator is illustrated. In this embodiment, the separator **18a** includes at least one indentation **20** in a side **21** thereof facing an optical fiber ribbon stack, such as the second stack **16.** The indentation **20**, as illustrated in FIGS. 4 and 5, is preferably dimensioned, adapted and/or contoured so that it may receive an end **22b** of an optical fiber ribbon of an optical fiber ribbon stack, such as the second stack **16,** which is adjacent to the facing side **21** of the separator. As shown in FIG. 5, the ends **(such as 22a, 22b)** of the optical fiber ribbons in the stacks **14, 16** reside within the contoured indentations. The indentations help to keep the ends of the ribbons in the optical fiber ribbon stacks **14, 16** from moving relative to the sides of the separator **18a** facing the stacks. Repeated excessive movement of the ribbons relative to the separator while in contact with the separator could cause the ends of ribbons to prematurely wear, among other things, which is undesirable. The contoured indentations also makes it easier to affix the ends of the optical fiber ribbons to the separator with an adhesive through better correspondence of adjacent surfaces if affixation of the ends of the optical fiber ribbons to the separator is desired.

Referring to FIGS. 6 and 7, a second alternative embodiment of the separator is illustrated. In this second embodiment, the separator **18a** includes at least two extensions **24a, 24b** extending from a side thereof, such as **23**, facing one of the optical fiber ribbon stacks, such as **16**. The two extensions **24a, 24b** are spaced apart from each other, dimensioned and adapted so as to receive an end, such as **22b**, of an optical fiber ribbon of the optical fiber ribbon stack **16** which is adjacent to the facing side **23.** Similar to the contoured indentations described above, the extensions help to keep the ribbons in the optical fiber ribbon stack **16** from moving relative to the side **23** of the separator **18b** to prevent excessive wear and keep elemental order within the cable, among other things. Like the contoured indentations, the extensions also make it easier to affix the ends of the optical fiber ribbons to the separator with an adhesive by increasing the adjacent surface area between the separator and optical fiber ribbon end if affixation of the ends of the optical fiber ribbons to the separator is desired. A plurality of extensions may be provided in each side of the separator **18b**, if desired, to affix a plurality of optical fiber ribbons in each stack to the separator **18b.**

The first and second alternative embodiments of the separator may be formed by extruding a thermoplastic polymer material through a die. Such fabrication techniques are well known in the art.

As shown above, the present invention provides an optical fiber telecommunications cable element containing at least two stacks of optical fiber ribbons which are prevented from mixing together by a separator. The orderly arrangement of the optical fiber ribbons is preserved during manufacture as well preserved inside an optical fiber telecommunications element placed in operation in the field. The embodiments disclosed herein admirably achieve the objects of the present invention; however, it should be appreciated by those skilled in the art that departures can be made by those skilled in the art without departing from the spirit and scope of the invention which is limited only by the following claims.

## Claims

1. An optical fiber telecommunications cable element (10) comprising:
- a tube (12);
- a first stack of optical fiber ribbons (14) disposed in the tube;
- a second stack of optical fiber ribbons (16) disposed in the tube adjacent to the first stack of optical ribbons (14); and
- a separator (18a, 18b, 18c) positioned between the first and second optical fiber ribbon stacks (14, 16).

2. The optical fiber telecommunications cable element of claim 1, wherein the separator (18a, 18b, 18c) is affixed to the first stack of optical fiber ribbons (14).

3. The optical fiber telecommunications cable element of claim 1, wherein the separator (18a, 18b, 18c) is affixed to both the first and second stacks of optical fiber ribbons (14, 16).

4. The optical fiber telecommunications cable element of claim 1, 2 or 3, wherein the separator (18a, 18b, 18c) has a length L, the tube (12) has an inside diameter D, and wherein the length L of the separator is substantially the same as the inside diameter D of the tube.

5. The optical fiber telecommunications cable element of one of claims 1 to 4, wherein the separator (18a, 18b, 18c) has a length L, wherein the first stack of optical fiber ribbons (14) has a height H1, wherein the second stack of optical fiber ribbons (16) has a height H2, and wherein the length L of the separator is greater than the height H 1, H2 of either stack of optical fiber ribbons.

6. The optical fiber telecommunications cable element of one of claims 1 to 4, , wherein the separator (18a, 18b, 18c) has a length L, wherein first stack of optical fiber ribbons (14) has a height H1, wherein the second stack of optical fiber ribbons (16) has a height H2, wherein height H1 is greater than height H2 and wherein the length L of the separator is substantially the same as the height H1 of the stack of optical fiber ribbons.

7. The optical fiber telecommunications cable element of one of claims 1 to 4, wherein the separator (18a, 18b, 18c) has a length L, wherein first stack of optical fiber ribbons (14) has a height H1, wherein the second stack of optical fiber ribbons (16) has a height H2, wherein height H1 is substantially the same as height H2 and wherein the length L of the separator is substantially the same as the height H1 of the stack of optical fiber ribbons.

8. The optical fiber telecommunications cable element of one of claims 1 to 7, wherein the optical fiber ribbons in the first and second stacks of optical fiber ribbons (14, 16) lay substantially co-planar.

9. The optical fiber telecommunications cable element of one of claims 1 to 8, wherein the separator (18a, 18b, 18c) is made from an extruded thermoplastic polymer material.

10. The optical fiber telecommunications cable element of one of claims 1 to 9, wherein the separator (18a, 18b, 18c) includes at least one indentation (20) in a side (21) thereof facing one of the optical fiber ribbon stacks(14, 16), the indentation being adapted to receive an end (22b) of an optical fiber ribbon of the optical fiber ribbon stack adjacent to the facing side (21).

11. The optical fiber telecommunications cable element of one of claims 1 to 10, wherein the separator (18a, 18b, 18c) includes a plurality of indentations (20) on a side (21) thereof facing one of the optical fiber ribbon stacks (14, 16), each of the indentations being adapted to receive respective ends (22a, 22b) of optical fiber ribbons of the optical fiber ribbon stack adjacent to the facing side.

12. The optical fiber telecommunications cable element of one of claims 1 to 9, wherein the separator (18a, 18b, 18c) includes a plurality of indentations (20) on sides (21) thereof facing each of the optical fiber ribbon stacks (14, 16), each of the indentations being adapted to receive respective ends (22a, 22b) of optical fiber ribbons of the optical fiber ribbon stacks adjacent to the facing sides.

13. The optical fiber telecommunications cable element of one of claims 1 to 12, wherein the separator (18a, 18b, 18c) includes at least two extensions (24a, 24b) extending from a side (23) thereof facing one of the optical fiber ribbon stacks (14, 16), wherein the two extensions are spaced apart from each other and adapted so as to receive an end (22a, 22b) of an optical fiber ribbon of the optical fiber ribbon stack adjacent to the facing side.

14. The optical fiber telecommunications cable element of one of claims 1 to 12, wherein the separator (18a, 18b, 18c) includes a plurality of extensions (24a, 24b) extending from a side (23) thereof facing one of the optical fiber ribbon stacks (14, 16), wherein the plurality of extensions are spaced apart from each other and adapted so as to receive respective ends (22a, 22b) of optical fiber ribbons of the optical fiber ribbon stack adjacent to the facing side.

15. The optical fiber telecommunications cable element of one of claims I to 12, wherein the separator (18a, 18b, 18c) includes a plurality of extensions (24a, 24b) extending from sides (23) thereof facing each of the optical fiber ribbon stacks (14, 16), wherein the plurality of extensions are spaced apart from each other and adapted so as to receive respective ends (22a, 22b) of optical fiber ribbons of the optical fiber ribbon stacks adjacent to the facing sides.
